# EUROPÄISCHE PATENTSCHRIFT

(11) **EP 2 604 472 B1**
(45) Veröffentlichungstag und Bekanntmachung des Hinweises auf die Patenterteilung: **01.04.2020**
(21) Anmeldenummer: 12008328.2
(22) Anmeldetag: 13.12.2012
(51) Int. Cl.: B60P 1/44, E02F 9/00, F16C 11/02, F16C 11/04

(54) **Hubladebühne**
Cantilever lift
Plateforme de chargement par levage

(30) Priorität: 13.12.2011 DE 102011120836
(43) Veröffentlichungstag der Anmeldung: 19.06.2013
(73) Patentinhaber: Palfinger Tail Lifts GmbH, 27777 Ganderkesee (DE)
(72) Erfinder: Zimmermann,Martin, 27711 Osterholz-Scharmbeck (DE)
(74) Vertreter: Möller, Friedrich

(56) Entgegenhaltungen:
- EP-A1- 1 281 568
- EP-A2- 0 089 941
- WO-A1-86/01241
- DE-U1-202004 008 674
- GB-A- 2 124 998
- US-A1- 2004 000 032
- US-A1- 2008 063 499
- US-B1- 8 042 877

## Beschreibung

Die Erfindung betrifft eine Hubladebühne gemäß dem Oberbegriff des Anspruchs 1.

Hubladebühnen dienen dazu, bei Fahrzeugen aller Art das Be- und Entladen insbesondere schwerer Güter zu erleichtern. Dazu verfügen diese Hubladebühnen über eine heb- und senkbar und im Allgemeinen auch schwenkbar an einem Fahrzeug angelenkte Ladeplattform. Die Ladeplattform ist zu diesem Zweck an einem Hubwerk gehalten, vorzugsweise im Bereich der Rückseite eines Aufbaus des Fahrzeugs. Das Hubwerk weist üblicherweise zumindest einen Linearantrieb, wie beispielsweise einen Hydraulikzylinder oder eine elektromotorisch antreibbare Gewindespindel zum Heben bzw. Senken der Ladeplattform auf. Zum Verschwenken der Ladeplattform ist vorzugsweise wenigstens ein weiterer Linearantrieb vorgesehen. Das Hubwerk ist im Regelfall an einer Tragvorrichtung befestigt, insbesondere an einem Tragrohr, welches mit dem Fahrzeug verbunden ist, etwa im Bereich von dessen Fahrzeugrahmen bzw. dessen Längsträgern. Durch eine parallelogrammförmige Ausbildung des Hubwerks, vorzugsweise mit wenigstens zwei, zumindest im Wesentlichen parallel verschwenkbaren Lenkerarmen, ist die Ladeplattform in parallelen Ebenen höhenverstellbar.

Die Lenkerarme sind vorzugsweise über quergerichtete Gelenk-Bolzen mit entsprechenden Aufnahmen der Ladeplattform einerseits und der Tragvorrichtung andererseits verbunden, ebenso die Linearantriebe. Soweit Bolzen-Verbindungen vorgesehen sind, ist der jeweilige Bolzen gegen unbeabsichtigtes Herausrutschen aus dem ihn aufnehmenden Lenkerarm gesichert. Hierzu ist es aus der EP 1 281 568 A1 bekannt, am Lenkerarm eine Schraubenaufnahme zu befestigen, durch die sich eine Schraube quer zum aus dem Lenkerarm herausragenden Endbereich des Bolzens erstreckt. Die Schraube drückt gegen den aus dem Lenkerarm herausragenden Endbereich des Bolzens. Dadurch sichert die Schraube den Bolzen kraftschlüssig im Lenkerarm.

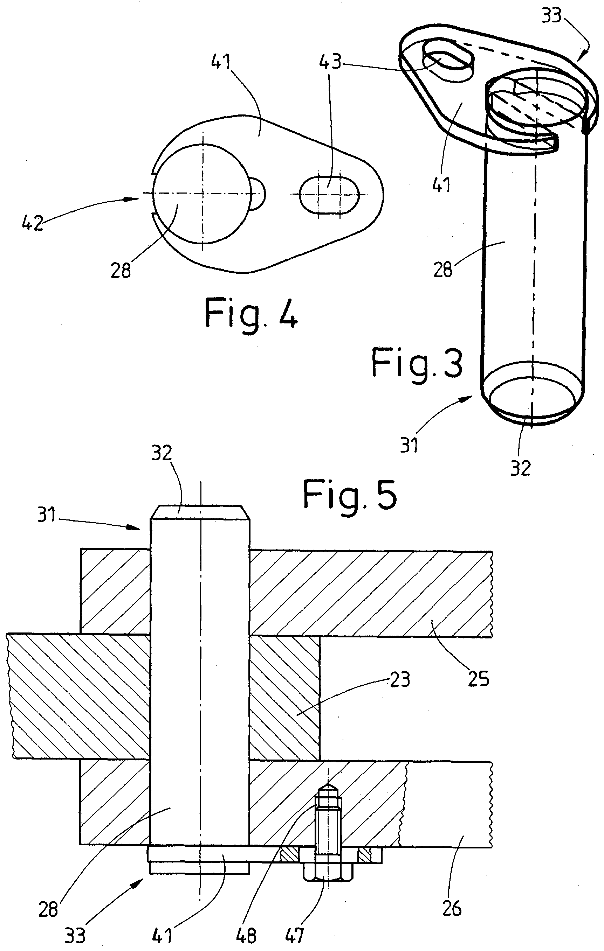

Ohne Bezug zu einer Hubladebühne zeigt die US 8,042,877 B1 eine Vorrichtung für die Anbindung von Hydraulikzylindern an ein Fahrzeug-Chassis. Die Vorrichtung weist Stifte auf, die zwischen Platten gehalten sind. Zusätzlich ist eine Endplatte vorgesehen, die mit einem Bolzen gesichert ist, siehe Fig. 3.

In der DE 20 2004 008 674 U1 ist ebenfalls ohne Bezug zu einer Hubladebühne eine Gelenkverbindung für Baumaschinen oder Hebewerkzeuge gezeigt. Ein Scharnierbolzen ist in Lageraugen von zwei Lagerlaschen befestigt. An freien, über die Lagerlaschen vorragenden Enden des Scharnierbolzens sind Sicherungslaschen fixiert. Die Sicherungslaschen sind mit jeweils einem Endbereich an der zugeordneten Lagerlasche mittels einer Schraube befestigt. Die Sicherungslaschen sind an ihren Enden gabelartig ausgebildet und in Nuten des Scharnierbolzens einschiebbar.

Aufgabe der vorliegenden Erfindung ist die Schaffung einer Hubladebühne, mit Gelenk-Bolzen, bei denen im laufenden Betrieb zusätzliches Spiel in geringerem Maße als bisher auftritt und die Gelenk-Bolzen dauerhaft zuverlässig gesichert sind.

Eine Hubladebühne zur Lösung dieser Aufgabe weist die Merkmale des Anspruchs 1 auf. Danach ist vorgesehen, dass das Sicherungsmittel eine Lasche oder Platte mit einem Schlitz ist, wobei der Schlitz keilförmig ausgebildet ist mit in seiner Längsrichtung abnehmbarer Weite und der Bolzen an seiner Oberfläche zwei einander gegenüberliegende Vertiefungen oder Ausnehmungen aufweist, welche gemeinsam den Schlitz aufnehmen und hierzu korrespondierend ausgebildet sind. Das Sicherungsmittel ist mit dem Bolzen verbunden und so angeordnet, dass eine Bewegung des Bolzens verhindert wird, zumindest relativ zu einem dem Sicherungsmittel benachbarten Bauteil. Auch können mehrere Sicherungsmittel vorhanden sein, die zusammenwirken. Das Sicherungsmittel ist insbesondere vom Bolzen trennbar bzw. ein eigenständiges Bauteil. Das Sicherungsmittel verhindert dadurch eine Bewegung des Bolzens in seiner Axialrichtung.

Das Sicherungsmittel ist derart ausgebildet, dass es eine Bewegung des Bolzens in Umfangsrichtung (Drehbewegung) verhindert. Der Bolzen weist an seiner Oberfläche mindestens eine Vertiefung oder Ausnehmung auf zur formschlüssigen Anlage oder zum Einsatz des Sicherungsmittels am oder in den Bolzen. Mit diesem Merkmal ist der Bolzen gegen Verdrehen und gegen axiales Verschieben sicherbar. Die Anlageflächen des Sicherungsmittels verlaufen antiparallel zueinander zur Bildung eines sich zu einer Schlitzöffnung hin vergrößernden Abstands zwischen den Anlageflächen. Die Abwinkelung der Anlageflächen des Sicherungsmittels ist vorzugsweise abgestimmt auf den Winkel zwischen den Anlageflächen der Nuten des Bolzens. Dies ermöglicht ein Aufschieben des Sicherungsmittels auf den Bolzen bis in eine spielfreie Position und bis zum Erhalt einer stramm sitzenden Verbindung zwischen Bolzen und Sicherungsmittel. Insbesondere verhindert das Sicherungsmittel eine Bewegung des Bolzens relativ zu einem benachbarten Bauteil, etwa zu einem Lenkerarm oder Linearantrieb oder einer Aufnahme hierfür. Dabei kann das Sicherungsmittel mit dem Bolzen fest verbunden sein.

Nach einem weiteren Gedanken der Erfindung verhindert das Sicherungsmittel jedwede Bewegung des Bolzens, nämlich in Axialrichtung und zugleich in Umfangsrichtung (Drehbewegung). Der Bolzen ist nach dem Einbau vorzugsweise spielfrei. Das sich im Laufe des Betriebes einstellende Spiel ist dann minimal.

Vorteilhafterweise ist der Bolzen durch das Sicherungsmittel mit einem benachbarten Bauteil verbunden, insbesondere mit einem Lenkerarm oder Linearantrieb oder mit einer Aufnahme für die genannten Bauteile. Die beschriebene Verbindung ist fest aber lösbar für eine im Wartungsfall erforderliche Demontage.

Vorzugsweise weist die Vertiefung oder Ausnehmung eine Anlagefläche für das Sicherungsmittel auf und ist insbesondere an einem Ende des Bolzens am Umfang desselben, nahe einer Stirnfläche des Bolzens angeordnet.

Nach einem weiteren Gedanken der Erfindung sind die zwei einander gegenüberliegenden Vertiefungen oder Ausnehmungen des Bolzens jeweils mit mindestens einer Anlagefläche für das Sicherungsmittel versehen. Es können ein oder mehrere Sicherungsmittel vorgesehen sein, insbesondere ein gemeinsames für beide Anlageflächen.

Vorteilhafterweise sind die Vertiefungen insbesondere queraxiale Nuten, vorzugweise mit jeweils zueinander parallelen Seitenwänden. Auch können die Seitenwände parallel zu einer benachbarten, queraxialen Stirnfläche des Bolzen ausgerichtet sein.

Bevorzugt ist eine Ausführung, bei der die Nuten jeweils mindestens eine Anlagefläche zur Anlage des Sicherungsmittels aufweisen, wobei die Anlageflächen vorzugsweise plan ausgebildet sind. Bei den Anlageflächen handelt es sich insbesondere um Böden der Nuten.

Nach einem weiteren Gedanken der Erfindung sind zwei einander gegenüber liegende Anlageflächen von zwei Nuten des jeweiligen Bolzens antiparallel zueinander verlaufen, derart, dass sich der Abstand der Anlageflächen zueinander entlang ihrer Längserstreckung verändert. Mit den derart angeordneten Anlageflächen ist die Verwendung zentrierend wirkender Sicherungsmittel möglich.

Im Rahmen der Erfindung liegt auch ein Sicherungsmittel mit mindestens einer Anlagefläche, welche an einer korrespondierend ausgebildeten Anlagefläche des Bolzens zur Anlage kommt. Dadurch ist eine eindeutige Positionierung des Sicherungsmittels relativ zum Bolzen möglich.

Vorteilhafterweise ist das Sicherungsmittel mit einem Schlitz versehen unter Bildung von zwei einander gegenüberliegenden, insbesondere planen Anlageflächen. Letztere können an den Anlageflächen des Bolzens zu liegen kommen.

Nach einem weiteren Gedanken der Erfindung ist das Sicherungsmittel mit einem benachbarten Lenkerarm oder Linearantrieb oder einer Aufnahme hierfür verbindbar, insbesondere derart, dass das Sicherungsmittel in verschiedene Positionen an der Aufnahme, am Lenkerarm oder Linearantrieb festlegbar ist. Das Sicherungsmittel ist dann nicht mehr bewegbar. Besteht eine stabile Verbindung zwischen Sicherungsmittel und Bolzen, so ist auch letzterer spielfrei fixiert.

Vorteilhafterweise ist das Sicherungsmittel eine Lasche oder Platte mit einem Schlitz einerseits und einem Langloch oder Schlitz andererseits, vorzugsweise koaxial oder achsparallel zueinander. Der an einem Ende vorgesehene, insbesondere keilförmige Schlitz greift in korrespondierende Nuten oder Vertiefungen am Bolzen, während das am anderen Ende vorgesehene Langloch oder der Schlitz für die Aufnahme eines Verbindungsmittels vorgesehen ist. Das Verbindungsmittel kann beispielsweise eine Schraube sein, mit der das Sicherungsmittel am Lenkerarm oder Linearantrieb oder einer Aufnahme hierfür fixiert ist. Langloch oder Schlitz für die Aufnahme des Verbindungsmittels ermöglichen die Fixierung des Sicherungsmittels an einem benachbarten Bauteil in leicht unterschiedlichen Positionen, ohne dass bei dieser Fixierung die möglichst stramme oder spielfreie Verbindung zwischen Sicherungsmittel und Bolzen gelockert wird. Die Lasche ist im weitesten Sinne zu verstehen und kann auch eine Platte, ein Blechstreifen oder etwas ähnliches sein.

Im Rahmen der Erfindung liegt auch eine Hubladebühne, bei der das Sicherungsmittel mit einem benachbarten Lenkerarm oder Linearantrieb oder einer Aufnahme hierfür verbindbar ist, insbesondere derart, dass das Sicherungsmittel in verschiedenen Positionen an Lenkerarm oder Linearantrieb oder der Aufnahme festlegbar ist.

Die Erfindung ist für alle Bauarten von Hubladebühnen mit Gelenk-Bolzen und entsprechend ausgestattete Fahrzeuge vorteilhaft verwendbar.

Weitere Merkmale der Erfindung ergeben sich aus der Beschreibung im Übrigen und aus den Ansprüchen.

Vorteilhafte Ausführungsformen der Erfindung werden nachfolgend anhand der Zeichnung näher erläutert. Es zeigen:
- Fig. 1: eine perspektivische Ansicht einer Hubladebühne,
- Fig. 2: einen vergrößerten Ausschnitt aus Figur 1,
- Fig. 3: eine perspektivische Ansicht eines Bolzens mit Sicherungsmittel,
- Fig. 4: eine stirnseitige Ansicht des Bolzens mit Sicherungsmittel gem. Fig. 3,
- Fig. 5: den Bolzen mit Sicherungsmittel gem. Fig. 3 in einer Längsseitenansicht und eingesetzt in eine Aufnahme mit Lenkerarm,
- Fig. 6: den Bolzen in einer Längsseitenansicht,
- Fig. 7: einen Schnitt durch den Bolzen gemäß Fig. 6 entlang der Linie VII-VII,
- Fig. 8: eine perspektivische Darstellung des Bolzens gem. Fig. 6,
- Fig. 9: eine perspektivische Darstellung des Sicherungsmittels, einer Lasche
- Fig. 10: eine Seitenansicht des Sicherungsmittels gem. Fig. 9.

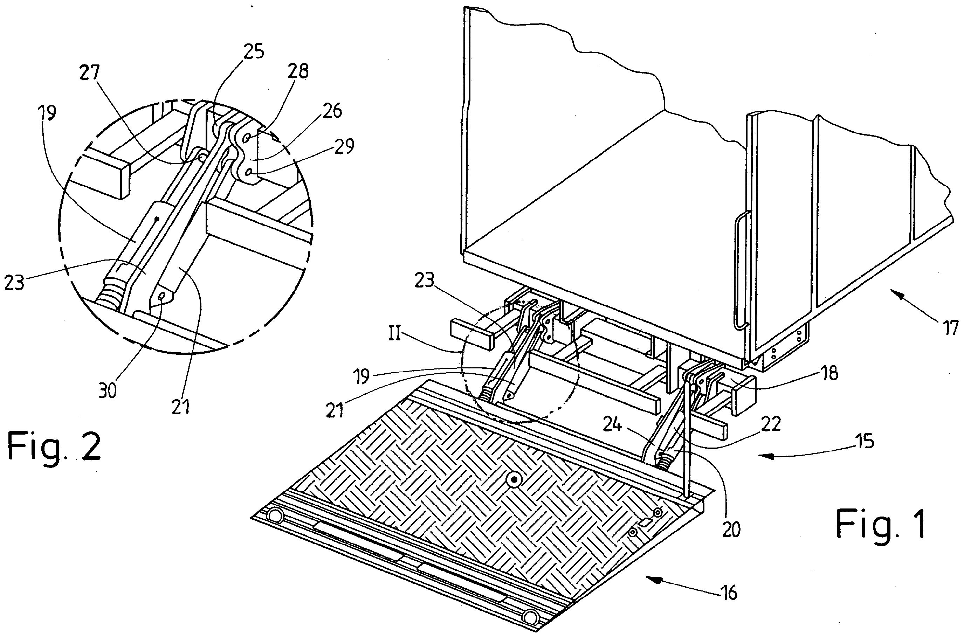

Eine in Fig. 1 gezeigte Hubladebühne für ein Fahrzeug mit Laderaum weist ein Hubwerk 15 auf, welches eine Ladeplattform 16 an der Rückseite eines Fahrzeugs 17 parallel zum Boden aufwärts und abwärts bewegt und zum Verschließen des Laderaums um eine Achse schwenkt. Hierzu ist das Hubwerk 15 an einem Tragrohr bzw. Tragprofil 18 des Fahrzeugs 17 befestigt.

Im Wesentlichen besteht das Hubwerk 15 aus Linearantrieben und Lenkerarmen. Bei den Linearantrieben handelt es sich beispielsweise um Hydraulikzylinder oder elektromotorisch angetriebene Spindeln. Gezeigt sind hier bezogen auf die Fahrzeugseiten links und rechts je ein Schwenkzylinder 19, 20 zum Schwenken der Ladeplattform 16, ein Hubzylinder 21, 22 zum Heben und Senken der Ladeplattform 16 sowie ein Lenkerarm 23, 24, über den die Ladeplattform 16 mit dem Tragrohr 18 verbunden ist. Schwenkzylinder und Lenkerarme bilden Parallelogramme.

Schwenkzylinder, Hubzylinder und Lenkerarme sind in Aufnahmen 25, 26 am Tragrohr 18 gelenkig gelagert. Hierzu weisen die Aufnahmen 25, 26 jeweils einen Bolzen 27, 28, 29 auf. In ähnlicher oder analoger Weise sind die Schwenkzylinder, Hubzylinder und Lenkerarme im Bereich der Ladeplattform 16 oder aneinander angelenkt. Letzteres ist in Fig. 2 ersichtlich. Der Hubzylinder 21 ist dort über einen Bolzen 30 nahe der Ladeplattform 16 mit dem Lenkerarm 23 verbunden. Gegenüberliegende Enden von Hubzylinder 21 und Lenkerarm 23 sind in der Aufnahme 26 an den Bolzen 28, 29 gehalten.

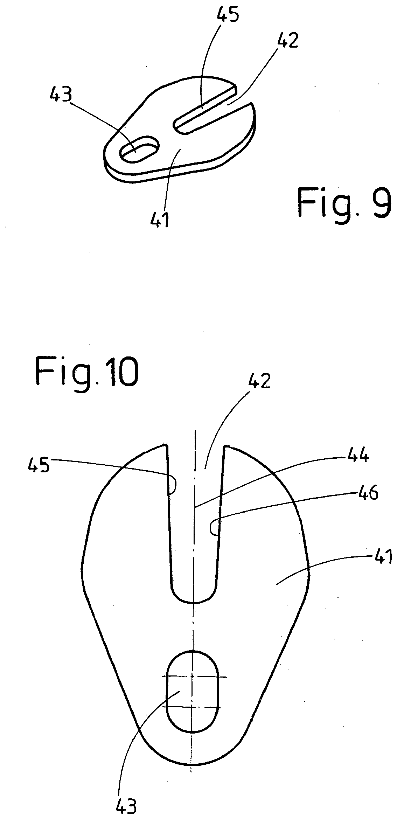

Einer oder mehrere der Bolzen 27 bis 30 sind in besonderer Weise ausgebildet und mit einem speziellen Sicherungsmittel versehen. Dies wird nachfolgend anhand des Bolzens 28 und in Verbindung mit den Figuren 3 bis 10 erläutert:
Der Bolzen 28 in der Aufnahme 26 für den Lenkerarm 23 ist zylindrisch ausgebildet, ohne überstehenden Kopf, und weist an einem Ende 31 eine umlaufende Fase 32 auf. Dies erleichtert das Einführen des Bolzens 28 in die Aufnahme 26.

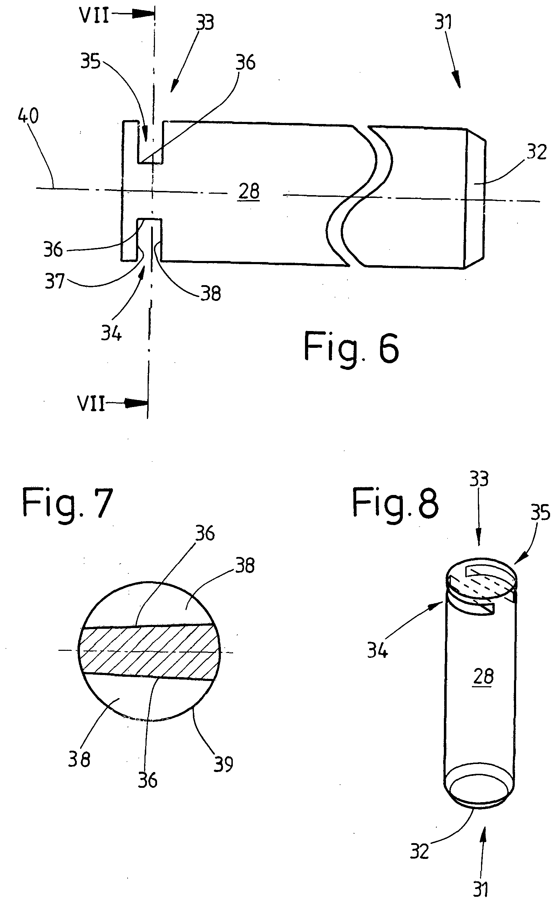

Am gegenüberliegenden Ende 33 weist der Bolzen 28 zwei einander über den Umfang gegenüberliegende Vertiefungen 34, 35 auf. Diese sind nach Art von Nuten ausgebildet, jeweils mit Bodenfläche 36 und zwei zueinander parallelen Seitenflächen 37, 38. Dabei sind die Bodenflächen 36 plan und bilden Sehnen zum Umfangskreis 39 des Bolzens 28. Außerdem verlaufen die Bodenflächen 36 zueinander unter einem leichten Winkel, siehe Fig. 7, sind demnach nicht ganz parallel zueinander ausgerichtet. Die durch die Bodenflächen 36 gebildeten Ebenen erstrecken sich in Richtung zwischen den Seitenflächen 37, 38 aber parallel zu einer Längsachse 40 des Bolzens 28.

Die nahe dem Ende 33 vorgesehenen Vertiefungen 34, 35 dienen der Aufnahme eines als Bolzensicherung vorgesehenen Sicherungsmittels, welches hier als ovale Platte 41 ausgebildet ist und am breiten Ende einen Schlitz 42 und am schmalen Ende ein Langloch 43 aufweist. Schlitz 42 und Langloch 43 erstrecken sich entlang einer Hauptachse 44.

Die Platte 41 ist zumindest im Bereich des Schlitzes 42 und benachbart hierzu so dimensioniert, dass ein passgenaues Einsetzen in die Vertiefungen 34, 35 möglich ist, das heißt, die Dicke der Platte 41 entspricht dem Abstand der Seitenflächen 37, 38 der nutartigen Vertiefungen 34, 35 im Bolzen 28 (Fig. 3 und 4). Der Schlitz 42 ist leicht keilförmig ausgebildet mit einem offenen Ende und weist als Anlageflächen Seitenflächen 45, 46 auf, korrespondierend zu den als Anlageflächen wirksamen Bodenflächen 36 der Vertiefungen 34, 35 im Bolzen 28. Genauso wie die Bodenflächen 36 sind die Seitenflächen 45, 46 zueinander leicht antiparallel ausgebildet, und zwar vorzugsweise gleichermaßen, sodass der Schlitz 42 eine zum offenen Ende hin zunehmende Weite aufweist. Entsprechend kann die Platte 41 bis zu einer spielfreien Anlage in den Vertiefungen 34, 35 auf den Bolzen 28 aufgeschoben oder sogar aufgepresst werden. Dabei liegen Oberseite und Unterseite der Platte 41 an den Seitenflächen 37, 38 der Vertiefungen 34, 35 an und es liegen die als Anlageflächen dienenden Seitenflächen 45, 46 des Schlitzes 42 im Sicherungsmittel, insbesondere der Platte 41, an den als korrespondierende Anlageflächen dienende Bodenflächen 36 der gegenüberliegenden nutartigen Vertiefungen 34, 35 im Bolzen 28 an. Bolzen 28 und Sicherungsmittel bzw. Platte 41 sind auf diese Weise spielfrei und stramm miteinander verbunden.

Der Bolzen 28 wird mit aufgesteckter Platte 41 als Gelenkbolzen in die Aufnahmen 25, 26 mit dazwischen liegendem Lenkerarm 23 eingesetzt bis zur Anlage der Platte 41 an der Aufnahme 26, siehe Figur 5. In dieser Stellung ist die Platte 41 durch eine Schraube 47 in der Aufnahme 26 fixiert. Dabei erstreckt sich die Schraube 47 durch das Langloch 43 in ein in der Aufnahme 26 vorgesehenes Gewinde 48. Das Langloch 43 ermöglicht unterschiedliche Positionen der Platte 41 relativ zur Aufnahme 26 bzw. zur Schraube 47. Die Schraube 47 kann fest angezogen werden, ohne dass dabei die stramme Verbindung zwischen Bolzen 28 und Platte 41 gelöst wird. Dadurch erfolgt auch eine spielfreie Verbindung des Sicherungsmittels, insbesondere der Platte 41, mit dem Lenkarm 23 oder einem anderen Bauteil der Ladeplattform 16, des Hubwerks 15 und/oder des Fahrzeugs.

Die beschriebene Ausführung des Bolzens 28 mit der queraxial aufgesteckten Platte 41 ermöglicht eine spielfreie Fixierung des Bolzens 28 an der Aufnahme 26. Eine Bewegung des Bolzens 28 relativ zu den Aufnahmen 25, 26 und zum Lenkerarm 23 ist auf diese Weise minimiert oder sogar vollständig unterbunden. Entsprechend ist der Verschleiß des Bolzens 28 im laufenden Betrieb minimal. Der Bolzen hat eine bestmögliche Lebensdauer.

**Bezugszeichenliste:**

| | | | |
|---|---|---|---|
| 10 15 | Hubwerk | 41 | Platte |
| 16 | Ladeplattform | 42 | Schlitz |
| 17 | Fahrzeug | 43 | Langloch |
| 18 | Tragrohr | 44 | Hauptachse |
| 19 | Schwenkzylinder | 45 | Seitenfläche |
| 20 | Schwenkzylinder | 46 | Seitenfläche |
| 21 | Hubzylinder | 47 | Schraube |
| 22 | Hubzylinder | 48 | Gewinde |
| 23 | Lenkerarm | | |
| 24 | Lenkerarm | | |
| 25 | Aufnahme | | |
| 26 | Aufnahme | | |
| 27 | Bolzen | | |
| 28 | Bolzen | | |
| 29 | Bolzen | | |
| 30 | Bolzen | | |
| 31 | Ende | | |
| 32 | Fase | | |
| 33 | Ende | | |
| 34 | Vertiefung | | |
| 35 | Vertiefung | | |
| 36 | Bodenfläche | | |
| 37 | Seitenfläche | | |
| 38 | Seitenfläche | | |
| 39 | Umfangskreis | | |
| 40 | Längsachse | | |

## Patentansprüche

1. Hubladebühne zum Anbau an ein Fahrzeug, mit einer durch ein Hubwerk (15) bewegbaren Ladeplattform (16), wobei das Hubwerk (15) Lenkerarme (23, 24) und einen oder mehrere Linearantriebe aufweist, und die Lenkerarme (23, 24) und/oder Linearantriebe durch Bolzen (27, 28, 29, 30) mit der Ladeplattform einerseits und/oder mit dem Fahrzeug andererseits verbunden sind und mindestens ein Bolzen (28) mit einem Sicherungsmittel versehen ist, das eine Bewegung des Bolzens (28) in Axialrichtung und eine Drehbewegung des Bolzens (28) verhindert, **dadurch gekennzeichnet, dass** das Sicherungsmittel eine Lasche oder Platte (41) mit einem Schlitz (42) ist, wobei der Schlitz keilförmig ausgebildet ist mit in seiner Längsrichtung abnehmbarer Weite, und dass der Bolzen (28) an seiner Oberfläche zwei einander gegenüberliegende Vertiefungen (34, 35) oder Ausnehmungen aufweist, welche gemeinsam den Schlitz aufnehmen und hierzu korrespondierend ausgebildet sind.

2. Hubladebühne nach Anspruch 1, **dadurch gekennzeichnet, dass** das Sicherungsmittel jedwede Bewegung des Bolzens (28) verhindert.

3. Hubladebühne nach Anspruch 1 oder 2, **dadurch gekennzeichnet, dass** der Bolzen (28) durch das Sicherungsmittel mit einem Lenkerarm (23, 24), Linearantrieb oder mit einer Aufnahme (25, 26) hierfür verbunden ist.

4. Hubladebühne nach Anspruch 1 oder einem der weiteren Ansprüche, **dadurch gekennzeichnet, dass** die zwei gegenüberliegenden Vertiefungen (34, 35) oder Ausnehmungen des Bolzens (28) zur formschlüssigen Anlage oder zum Einsatz des Sicherungsmittels am oder in den Bolzen (28) ausgebildet sind, wobei die zwei einander gegenüberliegenden Vertiefungen (34, 35) oder Ausnehmungen, jeweils mit mindestens einer Anlagefläche für das Sicherungsmittel versehen sind.

5. Hubladebühne nach Anspruch 4, **dadurch gekennzeichnet, dass** die Vertiefungen (34, 35) insbesondere queraxiale Nuten sind, vorzugsweise mit jeweils zueinander parallelen Seitenwänden.

6. Hubladebühne nach Anspruch 5, **dadurch gekennzeichnet, dass** zwei einander gegenüberliegende Anlageflächen von zwei Nuten des jeweiligen Bolzens (28) antiparallel zueinander verlaufen, derart, dass sich der Abstand der Anlageflächen zueinander entlang ihrer Längserstreckung verändert.

7. Hubladebühne nach Anspruch 1 oder einem der weiteren Ansprüche, **dadurch gekennzeichnet, dass** der Schlitz (42) des Sicherungsmittels zwei einander gegenüberliegende, plane Anlageflächen bildet, welche an korrespondierend ausgebildeten Anlageflächen des Bolzens (28) zur Anlage kommen.

8. Hubladebühne nach Anspruch 7, **dadurch gekennzeichnet, dass** die Anlageflächen des Sicherungsmittels antiparallel zueinander verlaufen zur Bildung eines sich zu einer Schlitzöffnung hin vergrößernden Abstands zwischen den Anlageflächen.

9. Hubladebühne nach Anspruch 1 oder einem der weiteren Ansprüche, **dadurch gekennzeichnet, dass** das Sicherungsmittel mit einem benachbarten Lenkerarm (23, 24) oder Linearantrieb oder einer Aufnahme (25, 26) hierfür verbindbar ist, derart, dass das Sicherungsmittel in verschiedenen Positionen am Lenkerarm (23, 24) oder Linearantrieb oder der Aufnahme (25, 26) festlegbar ist.

## Claims

1. Platform lift for attaching to a vehicle, having a loading platform (16) that is movable by a lifting mechanism (15), wherein the lifting mechanism (15) has link arms (23, 24) and one or more linear drives, and the link arms (23, 24) and/or linear drives are connected by bolts (27, 28, 29, 30) to the loading platform on one side and/or to the vehicle on the other side and at least one bolt (28) is provided with a securing means, which prevents the bolt (28) from moving in the axial direction and in rotation, **characterized in that** the securing means is a lug or plate (41) having a slot (42), wherein the slot is formed in a wedge-shaped manner with a width that that is reducible in its longitudinal direction, and **in that** the bolt (28) has, on its surface, two mutually opposite recesses (34, 35) or cutouts, which jointly accommodate the slot and are formed in a manner corresponding thereto.

2. Platform lift according to Claim 1, **characterized in that** the securing means prevents any movement of the bolt (28).

3. Platform lift according to Claim 1 or 2, **characterized in that** the bolt (28) is connected by the securing means to a link arm (23, 24), linear drive or to a receptacle (25, 26) therefor.

4. Platform lift according to Claim 1 or one of the further claims, **characterized in that** the two opposite recesses (34, 35) or cutouts in the bolt (28) are configured for form-fitting abutment or insertion of the securing means against or into the bolt (28), wherein the two mutually opposite recesses (34, 35) or cutouts are each provided with at least one abutment face for the securing means.

5. Platform lift according to Claim 4, **characterized in that** the recesses (34, 35) are in particular cross-axial grooves, preferably in each case with mutually parallel side walls.

6. Platform lift according to Claim 5, **characterized in that** two mutually opposite abutment faces of two grooves of the particular bolt (28) extend antiparallel to one another, such that the spacing of the abutment faces from one another changes along their longitudinal extent.

7. Platform lift according to Claim 1 or one of the further claims, **characterized in that** the slot (42) of the securing means forms two mutually opposite, planar abutment faces, which can come into abutment against correspondingly configured abutment faces of the bolt (28) .

8. Platform lift according to Claim 7, **characterized in that** the abutment faces of the securing means extend antiparallel to one another in order to form a spacing between the abutment faces that increases towards a slot opening.

9. Platform lift according to Claim 1 or one of the further claims, **characterized in that** the securing means is connectable to an adjacent link arm (23, 24) or linear drive or a receptacle (25, 26) therefor such that the securing means is securable in different positions to the link arm (23, 24) or linear drive or the receptacle (25, 26) .

## Revendications

1. Plate-forme de chargement par levage pour l'installation sur un véhicule, comprenant une plate-forme de chargement (16) pouvant être déplacée par un mécanisme de levage (15), le mécanisme de levage (15) présentant des bras de guidage (23, 24) et un ou plusieurs entraînements linéaires, et les bras de guidage (23, 24) et/ou les entraînements linéaires étant connectés par des boulons (27, 28, 29, 30) à la plate-forme de chargement d'une part et/ou au véhicule d'autre part et au moins un boulon (28) étant pourvu d'un moyen de fixation qui empêche un déplacement du boulon (28) dans la direction axiale et un mouvement de rotation du boulon (28), **caractérisée en ce que** le moyen de fixation est une éclisse ou une plaque (41) avec une fente (42), la fente étant réalisée en forme de coin avec une largeur diminuant dans sa direction longitudinale, et **en ce que** le boulon (28) présente, au niveau de sa surface supérieure, deux renfoncements (34, 35) ou évidements opposés l'un à l'autre qui reçoivent ensemble la fente et qui sont à cet effet réalisés de manière correspondante.

2. Plate-forme de chargement par levage selon la revendication 1, **caractérisée en ce que** le moyen de fixation empêche tout déplacement du boulon (28) .

3. Plate-forme de chargement par levage selon la revendication 1 ou 2, **caractérisée en ce que** le boulon (28) est connecté par le moyen de fixation à un bras de guidage (23, 24), un entraînement linéaire ou un logement (25, 26) pour celui-ci.

4. Plate-forme de chargement par levage selon la revendication 1 ou selon l'une quelconque des autres revendications, **caractérisée en ce que** les deux renfoncements (34, 35) ou évidements opposés du boulon (28) sont réalisés en vue d'un appui par engagement par correspondance de formes sur, ou pour l'insertion du moyen de fixation dans, le boulon (28), les deux renfoncements (34, 35) ou évidements opposés l'un à l'autre étant à chaque fois pourvus d'au moins une surface d'appui pour le moyen de fixation.

5. Plate-forme de chargement par levage selon la revendication 4, **caractérisée en ce que** les renfoncements (34, 35) sont en particulier des rainures axiales transversales, de préférence avec des parois latérales à chaque fois parallèles l'une à l'autre.

6. Plate-forme de chargement par levage selon la revendication 5, **caractérisée en ce que** deux surfaces d'appui opposées l'une à l'autre de deux rainures du boulon respectif (28) s'étendent de manière antiparallèle l'une par rapport à l'autre de telle sorte que la distance des surfaces d'appui l'une par rapport à l'autre varie le long de leur étendue longitudinale.

7. Plate-forme de chargement par levage selon la revendication 1 ou selon l'une quelconque des autres revendications, **caractérisée en ce que** la fente (42) du moyen de fixation forme deux surfaces d'appui planes opposées l'une à l'autre qui viennent en appui contre des surfaces d'appui du boulon (28) réalisées de manière correspondante.

8. Plate-forme de chargement par levage selon la revendication 7, **caractérisée en ce que** les surfaces d'appui du moyen de fixation s'étendent de manière antiparallèle l'une par rapport à l'autre pour former un espacement entre les surfaces d'appui augmentant vers une ouverture de fente.

9. Plate-forme de chargement par levage selon la revendication 1 ou selon l'une quelconque des autres revendications, **caractérisée en ce que** le moyen de fixation peut être connecté à un bras de guidage (23, 24) ou un entraînement linéaire adjacent ou à un logement (25, 26) pour celui-ci de telle sorte que le moyen de fixation puisse être fixé dans des positions différentes sur le bras de guidage (23, 24) ou l'entraînement linéaire ou le logement (25, 26).
